# EUROPEAN PATENT SPECIFICATION

(11) **EP 0 470 646 B1**
(45) Date of publication and mention of the grant of the patent: **29.11.1995**
(21) Application number: 91113471.6
(22) Date of filing: 09.08.1991
(51) Int. Cl.: G01B 11/06

(54) **In situ measurement of a thin film deposited on a wafer**
In situ-Messung einer dünnen Schicht auf einem Substrat
Mesure in situ d'une couche mince déposée sur un substrat

(30) Priority: 09.08.1990 US 564995
(43) Date of publication of application: 12.02.1992
(73) Proprietor: APPLIED MATERIALS, INC., Santa Clara, California 95054-3299 (US)
(72) Inventor: Carlson, David K., Santa Clara, CA 95051 (US); Bowman, Russell, San Jose, CA 95139 (US)
(74) Representative: Diehl, Hermann O. Th., Dr.

(56) References cited:
- FR-A- 2 519 139
- PATENT ABSTRACTS OF JAPAN, vol. 9, no. 129 (P-361)[1852], 5th June 1985 & JP-A-60 014 108
- TECHNISCHES MESSEN, vol. 49, no. 11, November 1982, pages 391-398, Munich, DE; C. LINHART et al.: "Berührungslose Bestimmung der Dicke von Oberflächenbeschichtungen durch thermische Messverfahren"

## Description

The present invention relates to a method and apparatus for in situ monitoring and control of the thickness of a thin film during deposition on a wafer.

In conventional processes, polycrystalline silicon is deposited on oxidized silicon by chemical vapor deposition. It is important to accurately monitor and control the thickness of the layer of polycrystalline silicon as it is deposited. Typically this is done by complicated laser measurement system.

At least one attempt has been made to monitor the thickness of polycrystalline silicon deposition during its deposition using an infrared detector. See "In-Process Thickness Monitor for Polycrystalline Silicon Deposition", T.I. Kamins and C.J. Dell'Oca, Journal Electrochemical Society, January 1972, p. 112. This article describes the use of an infrared detector to observe the radiation emitted from an oxide-covered silicon wafer during the deposition of a polycrystalline silicon film on the oxide. However, the process did not provide a means to compensate for variations in radiation emissions which are due to variations in temperature or gas flow during processing.

Document FR-A-2 519 139 refers to an apparatus for measuring the thickness of a paint coating on a substrate. The apparatus includes at least one band-pass filter for admitting a predetermined wave range of infrared rays, including both the infrared rays reflected at the surface of the substrate and passed through the paint coating and the infrared rays radiated due to the temperature both of the paint coating and the substrate. Two infrared ray sensors detect the radiation and their outputs are calculated in a processing unit in which the signals supplied from both infrared detectors are compared with each other and the difference representing only the reflected infrared rays are processed on the bases of reference coefficients relating to the reflection of the infrared rays at the reflection of the substrate and the absorption of the infrared rays by the paint coating to produce signals representing thickness of the paint coating.

This apparatus is disadvantageous in that the splitting through band-pass filters to get different signals for calculating a temperature independent value of the thickness of the paint is complicated and expensive. Sophisticated adjustment steps are necessary before operation. Furthermore, the disclosed apparatus is only applicable on samples that move under the detectors in a predetermined direction. Therefore, the measurement is not obtainable during deposition of the layer because in the operation the wafer should not be moved.

The invention provides a method for monitoring the thickness of a layer deposited on top of a specimen according to independent claim 1 and an apparatus for detecting the thickness of a layer deposited on a specimen according to independent claim 7. Further advantageous features, aspects and details of the invention are evident from the dependent claims, the description and the drawings. The claims are intended to be understood as a first non-limiting approach of defining the invention in general terms.

In accordance with the preferred embodiment of the present invention, a method and apparatus are presented for determining the thickness of a layer deposited on a specimen. For example, the thickness of a layer of polycrystalline silicon may be measured as it is deposited over silicon oxide on a silicon wafer.

The emissivity of radiation at the top of the silicon wafer is detected. This is done, for example, with one or more optical pyrometers. The emissivity varies with the thickness of the layer of polycrystalline silicon and with the temperature of the silicon wafer. In the present invention, the temperature of the silicon wafer is measured and the emissivity variation due to variation of the temperature is subtracted from the emissivity off radiation detected at the top of the water. The measurement of the temperature may be done, for example, by one or more optical pyrometers at the back of the wafer, or it may be done by a thermocouple. Once the emissivity variation due to variation of the temperature is subtracted, the resultant signal is used to calculate the thickness of the polycrystalline silicon layer.

The present invention allows for the monitoring of the thickness of a layer of polycrystalline silicon at the time of deposition. This monitoring may be done despite variations in temperature during processing time.

Figure 1 shows a simplified cross-sectional view of a thermal reactor used for chemical vapor deposition.

Figure 2 shows a top view of part of the infrared heating system of the thermal reactor shown in Figure 1.

Figure 3 shows a cross section of a silicon wafer upon which has been deposited a layer of polycrystalline silicon on top of an silicon oxide layer in accordance with the preferred embodiment of the present invention.

Figure 4 shows a plurality of optical pyrometers arranged to monitor thickness of a polycrystalline silicon layer deposited in the thermal reactor shown in Figure 1 in accordance with the preferred embodiment of the present invention.

Figure 5 shows an alternate embodiment of the present invention in which some of the optical pyrometers shown in Figure 4 are replaced with a thermocouple in accordance with an alternate embodiment of the present invention.

Figure 6 shows signals plotted on graphs illustrating operation of the preferred embodiment in the present invention.

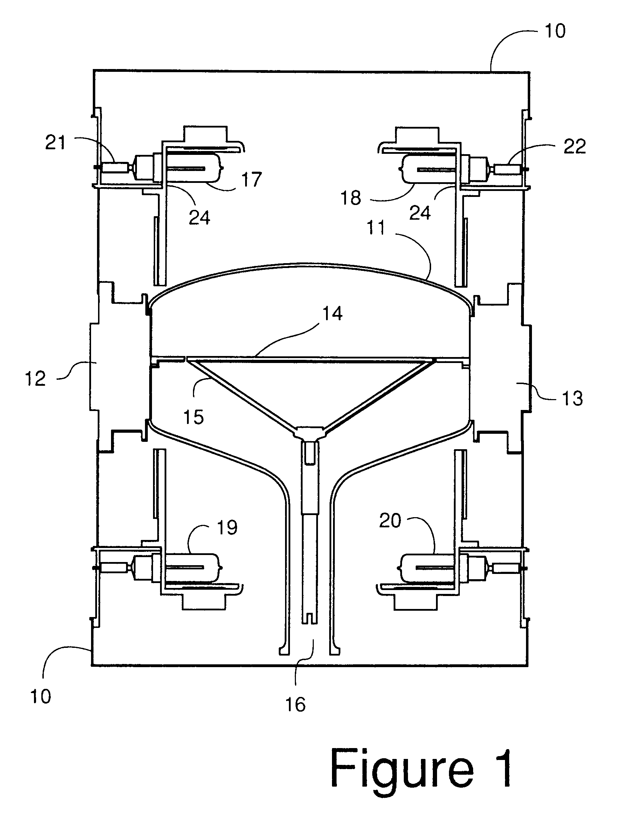

In Figure 1 is shown a cross-sectional view of a thermal reactor 11 used in chemical vapor deposition process. In the process, a layer of polycrystalline silicon is deposited upon a wafer 14. A wafer support structure 15 is used to support wafer 14. Wafer support structure 15 extends through a bottom aperture 16 of thermal reactor 11. This allows a drive assembly (not shown) to rotate wafer support structure 15 and thus wafer 14 during processing. This is done to enhance process uniformity.

During processing, gasses enter thermal reactor 11 through an entry port 12 and are removed through an exit port 13. Also during processing, heat is provided by infrared radiation bulbs, for example, an infrared radiation bulb 17, an infrared radiation bulb 18, an infrared radiation bulb 19 and an infrared radiation bulb 20. The infrared radiation bulbs are mounted on a support system 24 connected to housing 10. The walls of thermal reactor 11 are transparent allowing infrared radiation from the infrared radiation bulbs to freely enter thermal reactor 11 and heat wafer 14.

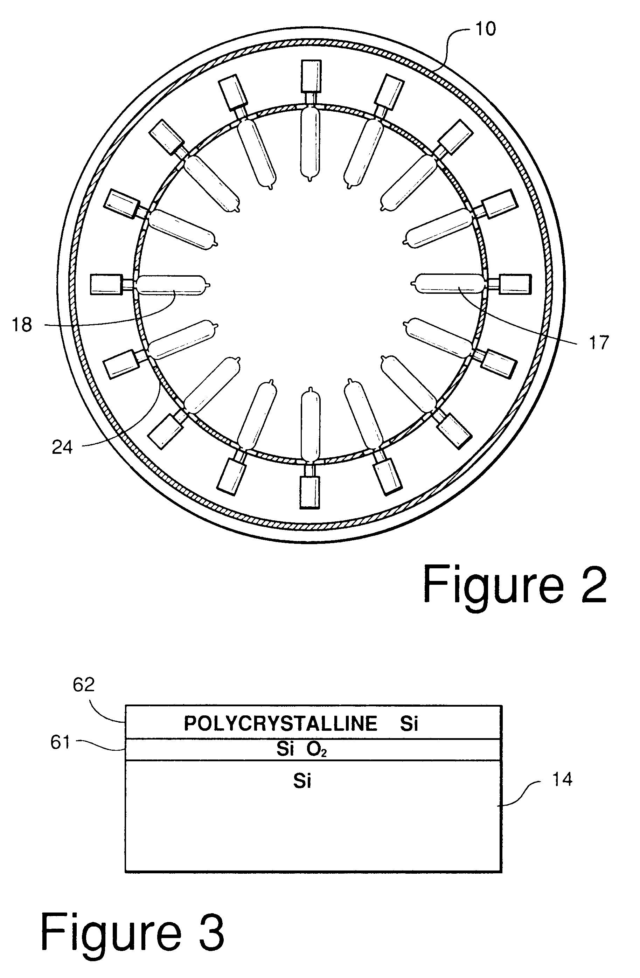

Figure 2 shows a top cutaway view of infrared radiation bulbs including infrared radiation bulb 17 and infrared radiation bulb 18. For a more complete description of thermal reactors used in semiconductor processing, see EP-A-0 445 596 entitled Double - Dome Reactor for Semiconductor Processing.

As illustrated by Figure 3, during processing a layer 61 of silicon oxide and a layer 62 of polycrystalline silicon may be deposited on silicon wafer 14. A typical thickness of layer 61 is 1000 Angstroms (1 Angstrom = 0,1 nm). A typical thickness of layer 62 is 3000 Angstroms, although layer 62 may typically range from 50 to 10,000 Angstroms.

During processing, a certain amount of infrared radiation is absorbed by layer 61 and layer 62 and a certain amount is emitted. On the top of wafer 14, the amount of infrared radiation varies with the thickness of layer 62 and with the temperature of wafer 14. On the bottom of wafer 14, the amount of infrared radiation varies with the temperature of wafer 14. In the preferred embodiment of the present invention the radiation level at the top of wafer 14 and the radiation level at the bottom wafer 14 are measured. Using the measured level of infrared radiation it is possible to subtract out the change in infrared radiation from the top of wafer 14 resulting from variations in temperature. Once the subtraction has been performed, it is possible to determine the thickness of layer 62 based on the infrared radiation at the top of wafer 14.

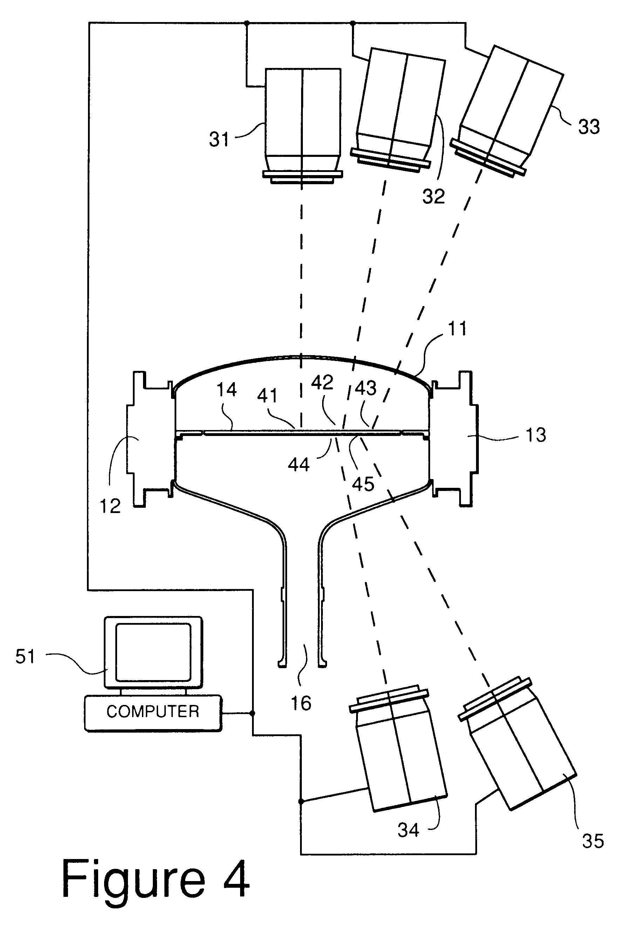

Figure 4 shows an optical pyrometer 31 placed to measure emission of infrared radiation at a point 41 on top of wafer 14. An optical pyrometer 32 is placed to measure emission of infrared radiation at a point 42 on top of wafer 14. An optical pyrometer 33 is placed to measure emission of infrared radiation at a point 43 on top of wafer 14. While a single optical pyrometer may be used to measure emission of infrared radiation at the top of wafer 14, a plurality of optical pyrometers may be used when it is desirable to monitor deposition uniformity of layer 62 of polycrystalline silicon.

Similarly, an optical pyrometer 34 is placed to measure emission of infrared radiation at a point 44 on the bottom of wafer 14. An optical pyrometer 35 is placed to measure emission of infrared radiation at a point 45 on the bottom of wafer 14. While a single optical pyrometer may be used to measure emission of infrared radiation from the bottom of wafer 14, a plurality of optical pyrometers may be used when it is desirable to monitor temperature uniformity across wafer 14.

Optical pyrometers 31-35 are, for example, able to measure temperature in the range of 500 degrees centigrade to 1250 degrees centigrade and detect a wavelength between two »m and four »m , for example 3.3 »m. Such an optical pyrometer is available from Ircon, Inc., having a business address of 7300 North Natchez Ave. Niles, Illinois 60648, or from Linear Labs, having a business address of 1290 Hammerwood Avenue, Sunnyvale, California 94089.

Output of optical pyrometers 31-35 is received and evaluated by a computer 51. Computer 51 generates a current output which is converted to a voltage between zero and ten volts that is proportional to the temperature detected by optical pyrometers 31-35.

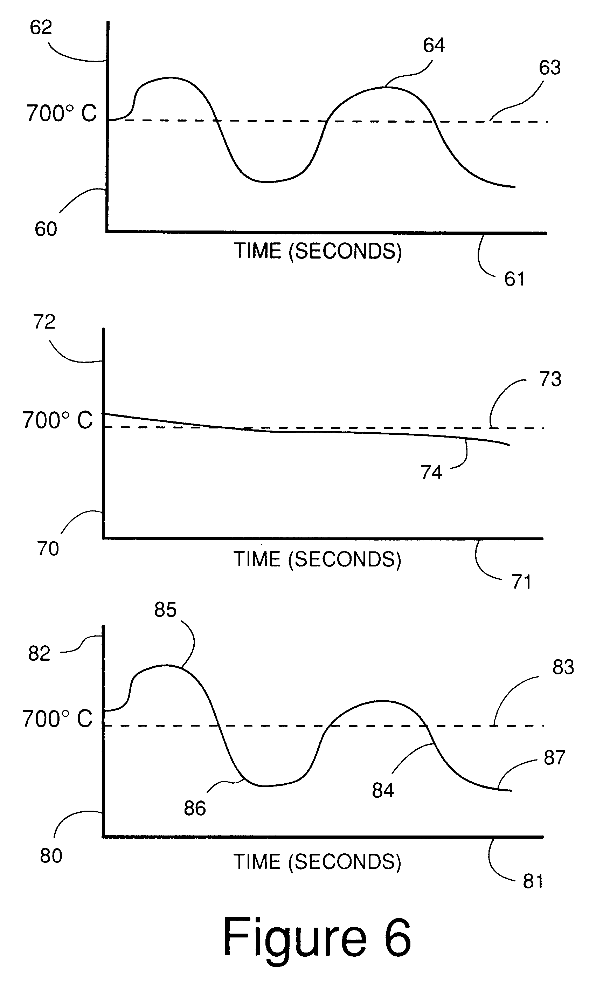

For example, Figure 6 shows a measured signal 64 plotted on a graph 60. Graph 60 has a horizontal axis 61 which represents the passage of time, and a vertical axis 62, which represents the temperature optical pyrometer 31, optical pyrometer 32 and/or optical pyrometer 33 measure at the top of wafer 14. A reference line 63 indicates a measured temperature of 700 degrees centigrade.

Figure 6 also shows a measured signal 74 plotted on a graph 70. Graph 70 has a horizontal axis 71 which corresponds to the passage of time as represented by horizontal axis 61 of graph 60. Graph 70 also has a vertical axis 72, which represents the temperature optical pyrometer 34 and/or optical pyrometer 35 measure at the bottom of wafer 14. A reference line 73 indicates a measured temperature of 700 degrees centigrade.

In order to generate a output which indicates changes in radiation emissions detected by optical pyrometer 31, pyrometer 32 and/or optical pyrometer 33 which are not due to changes in the temperature, computer 51 subtracts the amplitude of measured signal 74 from voltage amplitude of measured signal 64 to produce a calculated temperature differential signal 84 shown on a graph 80. Graph 80 has a horizontal axis 81 which corresponds to the passage of time as represented by horizontal axis 61 of graph 60 and horizontal axis 71 of graph 70. A vertical axis 82 represents the measured radiation emitted from the top of wafer 14 which is not caused by changes in temperature. A reference line 83 is also shown.

Calculated temperature differential signal 84 may be used to monitor the thickness of layer 62 at processing time. For example, calculated temperature differential signal 84 may be generated for a specific process. Parameters of the process may include, for example, type of oxide film deposited, pattern in which a deposit is made, the deposition rate, temperature of deposit and the pressure within thermal reactor 11 or other deposition chamber during deposition.

Once the parameters have been set, one or more calibration test runs are performed and temperature differential signal 84 is calculated for each test run. The process parameters may be varied for each of the test runs. The thickness of deposited layer 62 is also measured for each test run.

Data from the calibrated test runs is used to determine at what time, relative to temperature differential signal 84, a desired thickness of the deposited layer 62 is reached for a given set of process parameters. The slope of the change in relative differential signal 84 may be calculated for the location where an optimal thickness of deposited layer 62 is reached. In subsequent production runs, for the specified parameters, the waveform and slope of relative differential signal 84 may be used to monitor and control the thickness of the deposited layer.

For example, for a selected set of parameters, the measured thickness of layer 62 was measured during a calibration run to be 600 Angstroms at a point 85 on calculated temperature differential signal 84, 3000 Angstroms at a point 86 and 6000 Angstroms at a point 87. In future production runs using the same selected set of parameters, the calculated temperature differential signal 84 can be used to monitor and control the deposition process, for example, allowing the process to be stopped when the desired thickness of deposited layer 62 is reached.

Also, once calculated temperature differential signal 84 is stored in computer 51 for a specific set of parameters, on subsequent production runs using the same specific set of parameters, the calculated temperature differential signal 84 for the production run may be compared to the calculated temperature differential signal 84 for the test run. The parameters of future production runs may then be adjusted to compensate for any deviations in the signals.

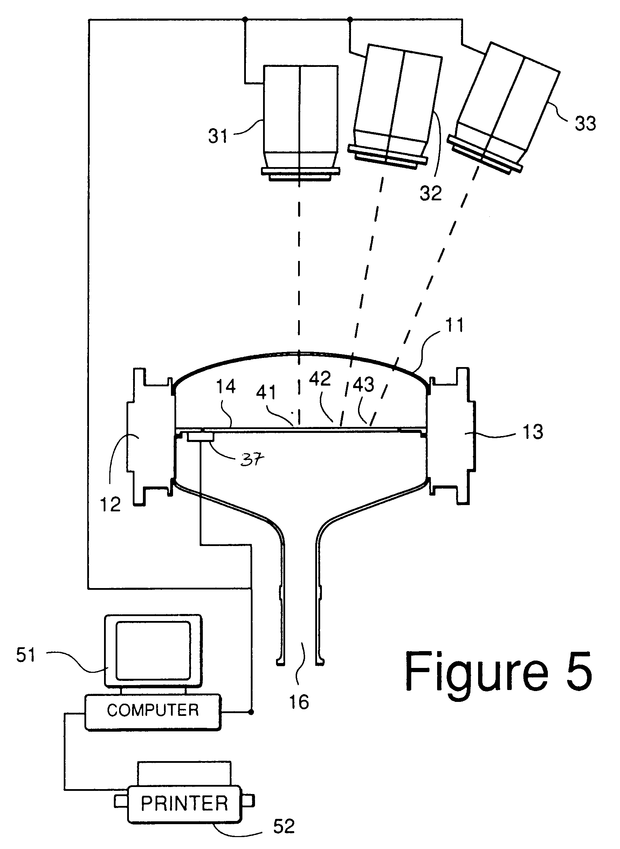

In Figure 5 optical pyrometers 34 and 35 are shown replaced by a thermocouple 37 in accordance with an alternate embodiment of the present invention. A printer 52 can be used to print out the data from the computer.

## Claims

1. A method for monitoring the thickness of a layer (62) deposited on top of a semiconductor substrate (14) in a thermal reactor (11) used for chemical vapor deposition, the method comprising the steps of:
measuring the emissivity of radiation at the top of the semiconductor substrate (14) with at least one optical pyrometer (31,32,33);
measuring the emissivity of radiation at the back of the semiconductor substrate (14) with a thermocouple (37) or at least one optical pyrometer (34,35), wherein a portion of the emissivity of radiation so measured is due to the temperature of the semiconductor substrate (14);
subtracting the amount of emissivity of radiation measured at the back of the semiconductor substrate (14) which is due to the temperature of the semiconductor substrate (14) from the amount of emissivity of radiation measured at the top of the semiconductor substrate (14) to determine the amount of measured emissivity of radiation that is not due to the temperature of the semiconductor substrate (14); and
determining the thickness of the deposited layer (62) from the amount of measured emissivity of radiation that is not due to the temperature of the semiconductor substrate (14).

2. The method of claim 1, wherein the temperature of the semiconductor substrate (14) is detected by a plurality of optical pyrometers (34,35) measuring the emissivity of radiation at different locations at the back of the semiconductor substrate (14).

3. The method of claim 1, wherein the emissivity of radiation at the top of the semiconductor substrate (14) is measured by a plurality of optical pyrometers (31,32,33) measuring the emissivity of radiation at different locations at the top of the semiconductor substrate (14).

4. The method as in one of the preceding claims, additionally comprising the step of:
making at least one test run in which the following substeps are performed:
detecting the emissivity of radiation at the top of the semiconductor substrate (14);
determining the amount of emissivity of radiation detected that is not due to the temperature of the semiconductor substrate (14); and
determining the thickness of the layer (62).

5. The method as in one of the preceding claims additionally comprising the step of:
varying processing parameters based on the amount of emissivity of radiation determined to be not due to the temperature of the semiconductor substrate (14).

6. The method as in one of the preceding claims wherein the specimen is a silicon wafer and the layer (62) is polycrystalline silicon deposited on silicon dioxide.

7. An apparatus for detecting the thickness of a layer (62) deposited on a semiconductor substrate (14) within a processing chamber (11), the apparatus comprising:
detecting means comprising at least one optical pyrometer (31,32,33) for detecting the emissivity of radiation at the top of the semiconductor substrate (14);
measuring means comprising at least one optical pyrometer (34,35) or a thermocouple (37) at the back of the semiconductor substrate (14) for measuring the temperature of the semiconductor substrate (14);
subtracting means (51), coupled to the measuring means (34,35,37) and to the detecting means (31,32,33) for subtracting from the amount of emissivity of radiation detected by the detecting means (31,32,33) an amount of emissivity of radiation due to the temperature of the semiconductor substrate (14) measured by the measuring means (34,35,37) to determine the amount of emissivity of radiation detected by the detecting means that is not due to the temperature of the semiconductor substrate (14); and
calculating means (51) coupled to the subtracting means, for calculating the thickness of the deposited layer (62) based on the amount of emissivity of radiation detected by the detecting means (31,32,33) that is not due to the temperature of the semiconductor substrate (14), as determined by the subtracting means (51).

8. The apparatus as in claim 7 wherein the measuring means (34,35) is a plurality of optical pyrometers measuring emissivity at different locations (44,45) at bottom of the semiconductor substrate (14).

9. The apparatus as in claim 7 wherein the detecting means (31,32,33) is a plurality of optical pyrometers measuring emissivity at different locations (41,42,43) at top of the semiconductor substrate (14).

10. The apparatus as in one of claims 7 to 9 wherein the semiconductor substrate (14) is a silicon wafer and the layer (62) is polycrystalline silicon deposited on silicon dioxide.

## Patentansprüche

1. Verfahren zum Überwachen der Dicke einer Schicht (62), welche auf einem Halbleitersubstrat (14) in einem zum chemischen Aufdampfen verwendeten thermischen Reaktor (11) abgelagert wird, wobei das Verfahren die folgenden Schritte umfaßt:
Messung der Strahlungsemission auf der Oberseite des Halbleitersubstrats (14) mit mindestens einem optischen Pyrometer (31,32,33);
Messung der Strahlungsemission auf der Rückseite des Halbleitersubstrats (14) mit einem Thermoelement (37) oder mindestens einem optischen Pyrometer (34,35), wobei ein Bereich der derart gemessenen Strahlungsemission abhängig von der Temperatur des Halbleitersubstrats (14) ist;
Subtraktion des an der Rückseite des Halbleitersubstrats (14) gemessenen Betrages an Strahlungsemission, welcher von der Temperatur des Halbleitersubstrats (14) abhängig ist, vom an dem Oberseite des Halbleitersubstrats (14) gemessenen Betrag an Strahlungsemission, um den Betrag an gemessener Strahlungsemission zu bestimmen, der nicht von der Temperatur des Halbleitersubstrats (14) abhängig ist; und
Bestimmung der Dicke der abgelagerten Schicht (62) von dem Betrag an gemessener Strahlungsemission, der nicht von der Temperatur des Halbleitersubstrats (14) abhängig ist.

2. Verfahren gemäß Anspruch 1, wobei die Temperatur des Halbleitersubstrats (14) mit einer Vielzahl von optischen Pyrometern (34,35), die die Strahlungsemission an verschiedenen Orten auf der Rückseite des Halbleitersubstrats (14) messen, festgestellt wird.

3. Verfahren gemäß Anspruch 1, wobei die Strahlungsemission auf der Oberseite des Halbleitersubstrats (14) durch eine Vielzahl von optischen Pyrometern (31,32,33), die die Strahlungsemission an verschiedenen Orten an der Oberseite des Halbleitersubstrats (14) messen, gemessen wird.

4. Verfahren gemäß einem der vorherigen Ansprüche, welches zusätzlich folgende Schritte umfaßt:
Durchführung zumindest eines Testlaufes, in welchem die folgenden Subschritte durchgeführt werden:
Feststellen der Strahlungsemission an der Oberseite des Halbleitersubstrats (14);
Bestimmen des festgestellten Betrags der Strahlungsemission, der nicht von der Temperatur des Halbleitersubstrats (14) abhängig ist; und
Bestimmen der Dicke der Schicht (62).

5. Verfahren gemäß einem der vorherigen Ansprüche, welches zusätzlich folgende Schritte umfaßt:
Verändern der Prozeßparameter, basierend auf dem Betrag der Strahlungsemission, der als nicht abhängig von der Temperatur des Halbleitersubstrats (14) bestimmt wurde.

6. Verfahren gemäß einem der vorherigen Ansprüche, wobei die Probe ein Siliziumwafer ist und die Schicht (62) auf Siliziumdioxid abgelagertes polykristallines Silizium ist.

7. Vorrichtung zum Feststellen der Dicke einer Schicht (62), welche auf einem Halbleitersubstrat (14) innerhalb einer Prozeßkammer (11) abgelagert wurde, wobei die Vorrichtung umfaßt:
eine Feststellungseinrichtung, welche mindestens ein optisches Pyrometer (31,32,33) zum Feststellen der Strahlungsemission an der Oberseite des Halbleitersubstrats (14) umfaßt;
eine Meßeinrichtung, welche mindestens ein optisches Pyrometer (34,35) oder ein Thermoelement (37) auf der Rückseite des Halbleitersubstrats (14) zum Messen der Temperatur des Halbleitersubstrats (14) umfaßt;
eine Subtraktionseinrichtung (51), welche mit der Meßeinrichtung (34,35,37) und der Feststellungseinrichtung (31,32,33) verbunden ist, zum Subtrahieren eines von der Temperatur des Halbleitersubstrats (14) abhängigen Betrags an Strahlungsemission, welcher von der Meßeinrichtung (34,35,37) gemessen wird, vom von der Feststellungseinrichtung (31,32,33) festgestellten Betrag an Strahlungsemission, um den von der Feststellungseinrichtung festgestellten Betrag, der nicht von der Temperatur des Halbleitersubstrats (14) abhängig ist, zu bestimmen; und
Recheneinrichtung (51), welche mit der Subtraktionseinrichtung verbunden ist, um die Dicke der abgelagerten Schicht (62) zu berechnen, basierend auf dem von der Feststellungseinrichtung (31,32,33) festgestellten, nicht von der Temperatur des Halbleitersubstrats (14) abhängigen Betrag an Strahlungsemission, wie er von der Subtraktionseinrichtung (51) bestimmt wurde.

8. Vorrichtung gemäß Anspruch 7, wobei die Meßeinrichtung (34,35) aus einer Vielzahl von optischen Pyrometern besteht, welche die Emission an verschiedenen Orten (44,45) am Boden des Halbleitersubstrats (14) messen.

9. Vorrichtung gemäß Anspruch 7, wobei die Feststellungseinrichtung (31,32,33) aus einer Vielzahl von optischen Pyrometern besteht, welche die Emission an verschiedenen Orten (41,42,43) an der Oberseite des Halbleitersubstrats (14) messen.

10. Vorrichtung gemäß einem der Ansprüche 7 bis 9, wobei das Halbleitersubstrat (14) ein Siliziumwafer und die Schicht (62) auf Siliziumdioxid abgelagertes polykristallines Silizium ist.

## Revendications

1. Procédé de contrôle de l'épaisseur d'une couche (62) déposée sur le dessus d'un substrat de semi-conducteur (14) dans un réacteur thermique (11) utilisé pour un dépôt chimique en phase vapeur, le procédé comprenant les étapes consistant à :
mesurer l'émission de rayonnement sur le dessus du substrat de semi-conducteur (14) à l'aide d'au moins un pyromètre optique (31, 32, 33) ;
mesurer l'émission de rayonnement au dos du substrat de semi-conducteur (14) à l'aide d'un thermocouple (37) ou d'au moins un pyromètre optique (34, 35), une partie de l'émission de rayonnement ainsi mesurée étant due à la température du substrat de semi-conducteur (14) ;
soustraire la quantité d'émission de rayonnement mesurée au dos du substrat de semi-conducteur (14) qui est due à la température du substrat de semi-conducteur (14) de la quantité d'émission de rayonnement mesurée sur le dessus du substrat de semi-conducteur (14), pour déterminer la quantité d'émission de rayonnement mesurée qui n'est pas due à la température du substrat de semi-conducteur (14) ; et
déterminer l'épaisseur de la couche (62) déposée à partir de la quantité d'émission de rayonnement mesurée qui n'est pas due à la température du substrat de semi-conducteur (14).

2. Procédé selon la revendication 1, dans lequel la température du substrat de semi-conducteur (14) est détectée par une pluralité de pyromètres optiques (34, 35) mesurant l'émission de rayonnement en différents emplacements au dos du substrat de semi-conducteur (14).

3. Procédé selon la revendication 1, dans lequel l'émission de rayonnement sur le dessus du substrat de semi-conducteur (14) est mesurée à l'aide d'une pluralité de pyromètres optiques (31, 32, 33) mesurant l'émission de rayonnement en différents emplacements sur le dessus du substrat de semi-conducteur (14).

4. Procédé selon l'une des revendications précédentes, comprenant en outre l'étape consistant à :
faire au moins un essai dans lequel les sous-étapes suivantes sont effectuées :
détecter l'émission de rayonnement sur le dessus du substrat de semi-conducteur (14) ;
déterminer la quantité d'émission de rayonnement détectée qui n'est pas due à la température du substrat de semi-conducteur (14) ; et
déterminer l'épaisseur de la couche (62).

5. Procédé selon l'une des revendications précédentes, comprenant en outre l'étape consistant à :
faire varier les paramètres de traitement en fonction de la quantité d'émission de rayonnement déterminée comme n'étant pas due à la température du substrat de semi-conducteur (14).

6. Procédé selon l'une des revendications précédentes, dans lequel l'échantillon est une plaquette de silicium et la couche (62) est du silicium polycristallin déposé sur du dioxyde de silicium.

7. Appareil de détection de l'épaisseur d'une couche (62) déposée sur un substrat de semi-conducteur (14) à l'intérieur d'une chambre de traitement (11), l'appareil comprenant :
des moyens de détection constitués par au moins un pyromètre optique (31, 32, 33), destinés à l'émission de rayonnement sur le dessus du substrat de semi-conducteur (14) ;
des moyens de mesure comprenant au moins un pyromètre optique (34, 35) ou un thermocouple (37) au dos du substrat de semi-conducteur (14) pour mesurer la température du substrat de semi-conducteur (14) ;
des moyens de soustraction (51), couplés aux moyens de mesure (34, 35, 37) et aux moyens de détection (31, 32, 33), pour soustraire de la quantité d'émission de rayonnement détectée par les moyens de détection (31, 32, 33) une quantité d'émission de rayonnement due à la température du substrat de semi-conducteur (14), mesurée par les moyens de mesure (34, 35, 37), afin de déterminer la quantité d'émission de rayonnement détectée par les moyens de détection qui n'est pas due à la température du substrat de semi-conducteur (14) ; et
des moyens de calcul (51) couplés aux moyens de soustraction et destinés à calculer l'épaisseur de la couche (62) déposée en fonction de la quantité d'émission de rayonnement, détectée par les moyens de détection (31, 32, 33), qui n'est pas due à la température du substrat de semi-conducteur (14), telle que déterminée par les moyens de soustraction (51).

8. Appareil selon la revendication 7, dans lequel les moyens de mesure (34, 35) sont une pluralité de pyromètres optiques mesurant l'émission en différents emplacements (44, 45) au-dessous du substrat de semi-conducteur (14).

9. Appareil selon la revendication 7, dans lequel les moyens de détection (31, 32, 33) sont une pluralité de pyromètres optiques mesurant l'émission en différents emplacements (41, 42, 43) sur le dessus du substrat de semi-conducteur (14).

10. Appareil selon l'une des revendications 7 à 9, dans lequel le substrat de semi-conducteur (14) est une plaquette de silicium et la couche (62) est du silicium polycristallin déposé sur du dioxyde de silicium.
